# EUROPEAN PATENT APPLICATION

(11) **EP 4 190 434 A1**
(43) Date of publication of application: **07.06.2023**
(21) Application number: 21020607.4
(22) Date of filing: 02.12.2021
(51) Int. Cl.: B01F 23/451, B01F 23/40, B01F 25/32, B01F 25/53, B01F 35/21, B01F 35/221, B01F 35/82, C02F 1/66, C02F 1/68, C02F 1/76

(54) **METHOD OF DIRECT AMMONIA INJECTION AND DEVICE**

(71) Applicant: Linde GmbH, 82049 Pullach (DE)
(72) Inventor: Taube, Carsten, 82049 Pullach (DE); Miklos, David, 82049 Pullach (DE); Milano, Juan, 82049 Pullach (DE)
(74) Representative: Reuß, Stephanie

(57) **Abstract**

The invention relates to a method of water alkalization, a water system for direct inline injection of pressurized liquid ammonia and a disinfection system. A method of water alkalization is provided comprising the steps of providing water or neutral pH water or neutral pH distilled water, providing ammonia (NH3) in a pressure-temperature regime where the ammonia (NH3) is kept in its liquid state, and injecting the liquid ammonia (NH₃) directly into the water.

## Description

The invention relates to a method of water alkalization, a water system for direct inline injection of pressurized liquid ammonia and a disinfection system.

Methods for water alkalization are known in the state of the art. In state-of-the-art methods ammonia hydroxide solution dosing is used. In these methods, pressurized liquid ammonia is evaporated, the gaseous ammonia is dissolved into water and the ammonia hydroxide solution is pumped into the water to be alkalized to adjust the pH. Alternatively, in other state-of-the-art methods pressurized liquid ammonia is evaporated into its gaseous state and dissolved in its gaseous state into water to adjust the pH. These methods are considered to be equipment heavy, costly and difficult to handle. It is an object of the present invention to reduce the costs, to simplify the equipment necessary to perform the method steps and to make handling of the respective method easier.

The object of the present invention is solved by a method of water alkalization, further by a water system, and further by a disinfectant system according to the independent claims.

A method of water alkalization comprises the steps of providing water or neutral pH water or neutral pH distilled water, providing ammonia in a pressure-temperature regime where the ammonia is kept in its liquid state and injecting the liquid ammonia directly into the water. This reduces the equipment complexity, reduces the costs and simplifies the handling.

Preferably, liquid ammonia is ammonia (NH3) in its liquid state. NH3 is in its liquid state between -77.7 °C and -33 °C in atmospheric pressure levels. Preferably, ammonia has to be under higher pressure to keep it in its liquid state at higher temperatures. Further preferably, liquid ammonia is stored according to the present invention in a high-pressure tank at a pressure of more than 20 bar, preferably more than 15 bar, further preferably more than 10 bar. According to the invention the pressure can be reduced e.g., down to 10 bar, to directly inject the liquid ammonia into the water.

According to the invention, "direct injection" preferably refers to injecting the liquid ammonia into water without a transition to another aggregate state, preferably without an intermediate gaseous state. Preferably, direct injection is not considered to be the dissolving of gaseous ammonium in water to generate ammonia hydroxide solution. Further preferably, metering an ammonia hydroxide solution into water to adapt the pH is not a "direct injection of liquid ammonia" in the sense of the invention.

According to the invention, ammonia water solution refers to a mixture of ammonia and water. Ammonia is preferably dissolved in water in a range of 5 % up to, but preferably not including, 30 %. Further, the content of ammonia in water may be defined by the amount of gaseous ammonia dissolved in the water, preferably independent of the way the ammonia is dissolved or injected into the water. Alternatively, the ammonia concentration in the water ranges preferably from 0.1 to 5 ppm, further preferably from 1 to 4 ppm, even further preferably from 2 to 3 ppm.

According to the invention, a "pressure-temperature regime" is a regime of the phase diagram of a compound. Here, the phase diagram of preferably ammonia is taken into account to determine the mandatory pressure-temperature (p,T) values that have to be used to keep the ammonia in its liquid state. As previously described preferably a phase transition is neither intended nor necessary for direct injection of the liquid ammonia.

According to the invention, the object is preferably solved by an injection pressure (p) in the pressure-temperature (p,T) regime being in a range between 7 and 10 bar or between 7.5 and 9.5 bar or between 8 and 9 bar. This allows to simplify the equipment, to reduce the costs and to make handling of the method easier.

The injection pressure is the pressure p that applies with respect to the pressure of the ammonia liquid at the point of injection. The point of injection (injection point) can be either of an injection nozzle, an injection connection, an injection valve, a spring valve, a ball point valve, an electrically controlled valve, a pressure reduction valve or any comparable valve that is capable to link an ammonia supply line (ammonia feed line) with a water line. The water line may be either of a main water line, a minor water line, a water tank, a boiler or any other water confining structure that allows the connection or structural integration with an injection point for matters of injecting the liquid ammonia. Further preferably, the injection pressure of the liquid ammonia is the pressure that keeps the ammonia in its liquid state in the ammonia feed line (with the respective temperature as well) up to the point of injection. Further preferably, the injection pressure applies from a pressure reduction valve in the ammonia feed line downstream to the injection point. Further preferably the pressure upstream of the aforementioned pressure reduction valve is higher e.g., for matters of storage of the liquid ammonia in the liquid state. As matter of example, the liquid ammonia can be stored in a high pressure tank in the respective p,T-value regime to keep it in the liquid state, where the pressure is preferably above 7 bar or above 8 bar or above 9 bar or above 10 bar. Further preferably 7 bar sets the lower limit and 25 bar sets the upper limit. It is preferred here and elsewhere that the border values do not form part of the respective ranges. Further preferably the temperature values are set such that, along with the pressure in the respective supply lines or storage compartments or storage tanks, the ammonia remains in the liquid state up to injection into the water.

An embodiment of the invention is defined by the temperature (T) in the pressure-temperature (p,T) regime being in a range between 10 °C and 55°C or between 15 °C and 45 °C or between 20 °C and 35 °C. This allows to simplify the equipment, to reduce the costs and to make handling of the method easier.

Preferably temperature (T) and pressure (p) are the two degrees of freedom to keep the ammonia in its liquid state up to injection. Therefore, it is preferred that the reduction or increase in temperature is tolerated as long as the ammonia does not change the aggregate state. On the other hand, in case the temperature is or has to be changed potentially resulting in the liquid ammonia it is also possible in a preferred embodiment to compensate and counteract with an adjustment of the pressure. Furthermore, the same holds true for a change in pressure potentially resulting in the ammonia changing its aggregate state. It can be tolerated as long as the ammonia is kept in its liquid state. In embodiments according to the invention it is preferred to (also) change and/or adapt the temperature in case the pressure is changing or has to be changed to compensate in case the ammonia would else change the aggregate state. In embodiments according to the invention it is preferred that the ammonia is kept in its liquid state up to injection into the water.

Further preferably, the above listed temperature ranges apply to the temperatures at the point of injection of the liquid ammonia into water. The temperature for storage and/or the temperature of the water may be different from the respective temperature of injection (injection temperature). It is further preferred that the term "temperature" in the sense of the invention refers to the macroscale temperature of the liquid ammonia in the supply line up to injection or alternatively, where applicable, to the ammonia as stored in a tank. Furthermore, microscale temperature effects of injection itself are preferably not to be taken into account and are not referred to as "temperature T" in the sense of the present invention. Nevertheless, according to the invention, it is preferred that the ammonia is kept and injected in its liquid state. The ammonia is preferably also injected in the liquid state into the water. The injection process can be referred to as the mixing process of two liquids. Therefore, in preferred embodiments, the temperature is in a range where the water is in a liquid state. Furthermore preferred, the pressure of the water (at the injection point) is close to the pressure of the liquid ammonia but in a range where the p,T regime of water allows the water to remain in its liquid state. It is further preferred that the water pressure is at the same pressure level of the liquid ammonia (when water remains liquid in this range) or that the water pressure is 5 % below the pressure level of the liquid ammonia at the injection point or that the water pressure is 10 % below the pressure level of the liquid ammonia or that the pressure level is 20 % below the pressure level of the liquid ammonia.

An embodiment of the invention is defined by providing the water as a water stream in a water line and injecting the liquid ammonia (NH3) at an injection connection directly into the water line. This simplifies the setup and therefore reduces the equipment costs and other costs, such as maintenance costs.

A water line according to the invention is any structure to either hold water such as a water tank or to transport water in a flow or stream such as a pipe, a tube, a channel, a funneled structure, etc. The geometry is not particularly relevant for the invention to work. The method according to the invention can be applied to high throughput systems e.g. with flow rates up to 250 t / h (speak: "tons per hour") in a boiler or water tank. The injection connection can be as described previously. The amount of liquid ammonium injected into the water line can be determined by the concentration to be achieved after injection preferably at a measurement point for at least either of the pH, the electric conductivity and/or the ammonia concentration itself. According to the invention, the measurement of pH is preferred in pure water (distilled water) systems. In these systems the definition of water purity and respective methods for purity measurements are preferably based on the norm by PowerTech eV, V. G. B. "VGB-Standard Feed Water, Boiler Water and Steam Quality for Power Plants/Industrial Plants." VGB PowerTech Service GmbH: Essen Germany (2011) and/or by ASME Research, Technology Committee on Water, and Steam in Thermal Power Systems. Feedwater Quality Task Group. Consensus on operating practices for the control of feedwater and boiler water chemistry in modern industrial boilers. Vol. 34. Amer Society of Mechanical, 1994. Accordingly, electric conductivity measurements and/or direct concentration measurements of ammonia are preferred performed in water of the purity level "ultrapure water" in the sense of the above-mentioned norms and respective ultrapure water analysis being based on one or both of the same norms. An example for water with a reduced grade of purity can be "drinking water". Therefore, the purity of water is preferably not to be mixed up with "healthy" and/or "toxic" but preferably it refers to the concentration of ions and/or the concentration of particles, further preferably in case these ions affect the pH and/or obscure the change in pH as response measurement for liquid ammonia injection control.

A "water stream" according to the invention is preferably a stream of water in a pipe, but as previously stated the main portion of water in the system can also be provided in a water tank. Most embodiments of the invention will relate on the water flowing, because the water is preferably transported from one volume to another while the liquid ammonia is injected. Alternatively, tank embodiments will rely preferably on circular geometries, where it can be beneficial to take out portions of water in the tank to inject the liquid ammonia thereto before refeeding the water ammonia mixture (solution) back into the tank. In these embodiments the water ends up in the same volume it was taken out from. Further alternatively and preferably the liquid ammonia can be injected directly into the water tank to adapt the pH in the water tank.

An embodiment of the invention is defined by providing the water as water stream in a water line, splitting of a portion of the water from the water stream flowing in the water line at a branch point into a by-pass water line, injecting the liquid ammonia (NH3) at an injection connection into the by-pass water line, feeding the water in the by-pass water line back into the water line. This allows to simplify the equipment, to reduce the costs and to make handling of the method easier.

The water in the water line can have a pressure between 1 and 6 bar, preferably between 1.5 and 5 bar, further preferably between 2 and 4 bar, even more preferably between 2.5 and 3 bar. This allows to reduce the demands in the equipment in larger parts of the equipment for fighting material fatigue caused by higher pressure values. In these and comparable embodiments where there is a high pressure difference between the water line and the liquid ammonia line preferably a pressure pump is provided which increases the pressure towards the injection point, the pump preferably being located in the by-pass line upstream of the injection point, to bring the water pressure closer to the pressure level of the liquid ammonia in the ammonia feed line, also called ammonia injection line. The flow in the water line is not limited in any way and may, in practice, be e.g. between 10 and 1,000 l/h or 20 and 200 l/h, or between 40 and 150 l/h, or between 80 and 120 l/h, or between 90 and 110 l/h.

Preferably, the pressure is reduced downstream (relative to the stream of water in the by-pass line) of the injection point. The reduction is preferably done by a pressure reduction valve, but also a pressure reduction pump can be used. After injection of the liquid ammonia a static mixer can be provided that blends and homogenizes the mixture of water and liquid ammonia to lead to a homogenous solution of ammonia in water.

The term "by-pass water line" can refer to the structure being such that a part of the water line is by-passed. The by-pass water line can flow parallel to the water line flow or it can flow anti-parallel to the flow in the water line. The anti-parallel flow preferably does not refer to the geometry being perfectly parallel, but further preferably it refers to the fact that the water flowing in the by-pass water line is transferred back so against the stream of water in the water line. Thus, in respective embodiments it is possible to feed the water in the by-pass line back into the water line upstream of the branch point. The respective understanding applies for "parallel flow" to bring the alkalized water upstream of the branching point back into the main water line through flow in the by-pass water line.

Preferably, the water in the by-pass line is fed back into the water line upstream of the branch point and/or the portion in the by-pass water line is transferred in a direction that is against the water stream flow direction in the water line and/or the water line is a main water line with a main water flow and/or the by-pass water line is a minor water line with a minor water portion. This allows simplifying the equipment and setup layout, to reduce the costs and to make handling of the method easier. Furthermore, the metering of liquid ammonia into the water stream is more precise.

"Main" and "minor" preferably refer to the line being used for some main purpose afterwards e.g., process water for a process linked to the liquid ammonia injection. Alternatively, it can be preferred to refer to "main" in the context of volume or flow being bigger or higher when compared to the "minor" portion. Further preferably the volume ratio between the main water stream and the minor water portion is such that the respective ppm (speak: "parts per million") concentration ratio of liquid ammonia with respect to water is achieved. The preferred reference point may be a measurement point in the main water line and/or in the minor (by-pass) water line. "Main" and "minor" are not per se to be mixed up with "more or less important".

In an embodiment the pH and/or the conductivity and/or the ammonia concentration is measured in the water line and/or the main water line at least one measurement point and the amount of liquid ammonia (NH3) injected into the water line and/or the main water line and/or the by-pass water line is controlled based on the pH and/or on the electric conductivity and/or on the ammonia concentration measured at the measurement point. This allows to simplify the measurement scheme of the ammonia concentration on the one hand and gives flexibility on the other hand regarding the setup design. Thus, the setup design can be simpler when compared to the state of the art.

According to this embodiment, the liquid ammonia injection can be measured based on different parameters. These parameters can be measured isolated, so only one of them or in any combination of interest, preferably based on the implementation and the setup. The pH can for example allow easy assessment on the ammonia injection, especially in cases where the water has a certain level of purity as discussed elsewhere throughout this description. It is referred back to the respective passages concerning purity of water and respective norms for defining these purity levels and the respective methods of measuring these purities. The pH measurements are preferably conducted based on EN ISO 10523:2012 as in force of 04.2012. Alternatively, or additionally, it can be preferred to measure electric conductivity, preferably as defined in ISO 7888:1985 as in force of 05.1985. This is especially preferred in cases where the liquid ammonia injection is not possible or more difficult when based on pH measurement (alone) or where (isolated) pH measurements might lead to lower predictability of the results, lower reproducibility and/or lower efficacy of the measurement. Alternatively, or additionally, the ammonia concentration and/or ammonia amount after liquid ammonia injection can be determined directly based on the measurement methods defined in ISO 5664:1984 or ISO/DIS 23695 (see for a German version: https://www.beuth.de/de/norm-entwurf/iso-dis-23695/334946786) or using online Colorimetric, Ion-selective, and UV-Vis analyzers as summarized in "Measuring Ammonia with Online Analyzers", Tony Palmer, Maureen Ross and Stephen G. Nutt, Water & Wastes Digest, Jun 26, 2002.

A "measurement point" according to the invention is preferably the point of measurement in the sense of the physical interaction of a probe with the water in either of the main water line, the minor water line, the by-pass water line or the water tank or any water boiler mentioned here or elsewhere.

An embodiment of the invention is preferably defined by the measurement point being downstream of the branch point, and/or by the controlling of the amount of liquid ammonia fed into the water line or the main water line or the by-pass water line being based on an opening and/or a closing of a valve in a liquid ammonia line, and/or by the controlling of the amount of liquid ammonia fed into the water line or the main water line or the by-pass water line being based on an opening and/or a closing of a valve at the injection connection. This makes the metering and the injection control of the liquid ammonia injection more direct and more precise, even though the setup is simpler and more cost efficient when compared to the state of the art.

The control can be an active control such as an electronically controlled valve opening and closing preferably upon a trigger from a control unit that processed the respective measurement value preferably mirroring the injected amount of liquid ammonia into the water. Alternatively, or additionally, the valve is an active pressure reduction valve working in coordination with an injection connection valve in that the injection connection valve is a spring valve that opens when a certain pressure level difference between the water line, the liquid ammonia is to be injected to, and the respective ammonia feed line (liquid ammonia line) is given. In an embodiment of the invention the active pressure reduction valve does not reach the respective pressure difference in case the pH of the water is already at the threshold measurement value for example the threshold pH or the threshold ammonia concentration or the threshold electric conductivity. Furthermore preferably, the pressure pump that potentially increases the pressure in the by-pass line can also be controlled by a process control unit processing the measurement values stated and explained in detail elsewhere throughout the description. In another embodiment it can be preferred that the by-pass line is cut short in that no water portion enters the by-pass line when the threshold values are met. This can either be achieved by shutting down the respective pump or by closing a respective actively controlled valve at the branch point. Furthermore, it can be preferred in an alternative embodiment that the pressure valve (or also called injection valve) is located directly at the injection connection to directly open or close based on a respective control signal of the process control unit based on the measured parameters as laid out in detail elsewhere throughout the description (e.g., pH, electric conductivity, amount and/or concentration).

The "liquid ammonia line" which could also be called "liquid ammonia injection line" or "liquid ammonia feed line" is the line (tube, pipe, channel, funnel, etc.) that transfers the respective liquid ammonia from the storage facility of the storage device or the production site of the liquid ammonia to the "injection connection".

An embodiment of the invention is preferably defined by the ammonia being directly transferred from an ammonia production site where ammonia is produced as a product and/or where ammonia is produced as a waste product in form of a liquid ammonia stream to the injection connection. This reduces the costs for storage, allows recycling of potential ammonia waste production and reduces costs.

According to embodiments, an ammonia (waste) production is any process in a production facility that (intentionally or unintentionally as a waste product) produces the respective ammonia in corresponding quantities and amounts to allow the production of respective amounts of liquid ammonia to be produced. The method according to the invention is thus implemented directly at a production plant when a second process is concatenated that is based on alkalized water with a respective pH for example.

It is further preferred to reduce the pressure down to the pressure at a reunification connection where the water of the by-pass line or a minor water line is reunified with the water of the water line or the water of the main water line. Alternatively, the pressure can be reduced such that the alkalized water can be directly used in a next process step.

The "pressure differences" are to be understood such that when one pressure level is brought close to another pressure level for transition of liquid from one line to another the general understanding shall be that a slight difference of pressure remains to allow for (passive) transfer of the liquids from one line to the other line. This way it can be for example possible that the water from the by-pass line transfers to the main water line because the pressure level in the main water line exceeds the pressure of the main water line at the reunification connection to allow the transfer. This preferably holds true for other line connections such as the ammonia feed line injection connection to the by-pass water line or the main water line. In cases this is preferably not the case respective pumps can be provided to transfer the respective liquid against a pressure gradient.

In an embodiment, the pressure is reduced after the ammonia is fed into the water.

An embodiment of the invention is preferably defined by the target ammonia concentration in the water line or the main water line ranging between 0.5 to 5 ppm or between 1 and 4 ppm or between 1.5 and 3 ppm. This makes metering more precise and reduces the equipment costs.

The amount of ammonia per amount of water is preferably given in parts per million (ppm), but preferably referring to the gaseous solution of ammonia in water for matter of comparison only. This has been stated elsewhere in the description already and it is referred back for further details and not repeated for matter of conciseness. Nevertheless, this must not lead to the assumption that the ammonia is dissolved as a gas as it is discussed in great detail throughout the description of this invention. The ppm levels to be achieved after direct injection (at the measurement points discussed) preferably determine the ratios of volumetric flow in the different lines discussed herein.

An embodiment of the invention is defined by the injection connection being located at a boiler feed water system, and/or by the injection connection being directly connected to a boiler of the boiler feed water system, and/or wherein the injection connection is directly connected to a water tank.

Preferably the water tank may function as a boiler or the boiler may be a sort of water tank and the water is transferred in the main water line as boiler feed water into the tank and transferred via one or more (main) water lines to boiler feed water consumers. The consumers can be supplied by high pressure boiler feed water or even super high pressure boiler feed water. According to some embodiments the respective high pressure and super high pressure can be achieved by high-pressure pumps and super-high-pressure pumps. Preferably the branch point for transferring a portion of water is upstream of these high-pressure pumps or these super-high-pressure pumps to avoid unnecessary equipment costs for reducing this high pressure or super-high pressure down to the levels of direct liquid ammonia injection into the by-pass line. In respective embodiments the by-pass line can function as a feedback loop regarding the pH in the boiler (or water tank). The boiler or water tank can form part of the (main) water line.

According to another aspect of the invention the object is preferably solved by a water system for direct inline injection of pressurized liquid ammonia, or a water system for direct inline injection of pressurized liquid ammonia according to one of the preceding claims, comprising a water line, a by-pass water line splitting off from the water line at a branching point, an injection connection in the by-pass line for injecting liquid ammonia (NH3) into the water flowing in the by-pass line, and a reunification connection for feeding the water from the by-pass water line back into the water line. This reduces the equipment costs and makes handling of the equipment easier.

Preferably the method aspects can directly be transferred to the water system to characterize the water system even further. Also, the respective definitions provided elsewhere with respect to the method according to the invention apply to the water system. Repetition of all these aspects and definitions is just avoided for matter of conciseness only.

An embodiment of the invention is preferably defined by a water system further comprising at least one booster pump to increase the pressure from the pressure level of the main water line towards the pressure of the liquid ammonia line and/or wherein the reunification connection for feeding the water from the by-pass water line back into the water line is located upstream of the branching connection. This reduces the equipment costs and makes handling of the equipment easier.

The booster pumps do preferably not correspond to the high-pressure pumps or super-high-pressure pumps described elsewhere in the description.

An embodiment of the invention is preferably defined by a water system further comprising at least one measurement device measuring at least either of the pH, the electric conductivity and/or the ammonia concentration in the water line, a valve or pressure reduction valve in the liquid ammonia line controlled dependently on at least either of the target pH or the electric conductivity or the ammonia concentration measured at the measurement device. This reduces the equipment costs and makes handling of the equipment easier.

An embodiment of the invention is preferably defined by a water system wherein the target pH ranges between 8.2 and 10 or 8.8 and 10 or 9 and 10 or between 9.2 and 9.8 or wherein the ammonia ranges between 0.1 to 5 ppm or 0.5 to 5 ppm or between 1 and 4 ppm or between 1.5 and 3 ppm. This makes metering more precise and reduces the equipment costs.

According to another aspect of the invention the object is preferably solved by a disinfection system based on a water system according to the invention, further comprising dosing of chlorine to obtain the disinfectant monochloramine. This reduces the equipment costs and makes handling of the equipment easier and simultaneous improves the disinfectant effect.

Preferably the disinfecting system is a water system. Alternatively, the water system is to be understood as a device throughout the description of the invention that is implemented into the disinfectant system. The same aspects and definitions apply for the disinfecting system as described and discussed throughout the description with respect to the method according to the invention and according to the water system.

It is understood that the above features, to be explained below in further detail with respect to the figures, can be used not only in the combinations indicated, but also in other combinations or on their own, without departing from the scope of the present invention.

### Brief description of the drawings

The invention will now be explained in more detail by means of examples of embodiments, with reference to the accompanying figures. They show in simplified, not to scale representation:
- Fig. 1: a schematic drawing of a first embodiment of a water system according to the invention,
- Fig. 2: a schematic drawing of a second embodiment of a water system according to the invention,
- Fig. 3: plot of ammonia concentration vs. conductivity change and pH change in pure water.

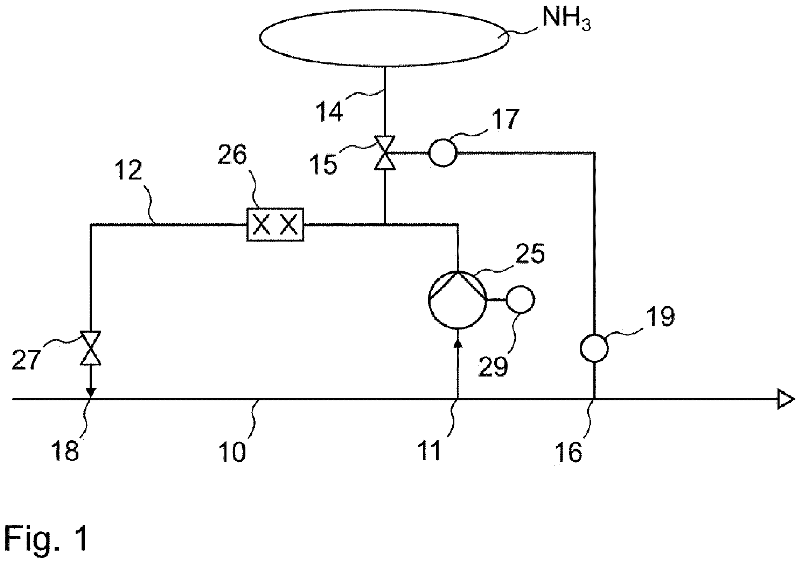

Fig. 1 shows a first embodiment of a water system 20 according to the invention. Therein, a main water line 10 transfers water in a water flow at neutral pH up to a branch point 11 where a minor water portion is split off and transferred to a by-pass water line 12. In the by-pass water line 12, a booster pump 25 increases the pressure up to 9 bar from the initial 1.5 bar for the pressure to be closer to the pressure of liquid ammonia NH3 at an injection connection 13.

Liquid ammonia NH3 is stored in a storage tank according to the first embodiment at a pressure ranging from 15 to 55 bar. The liquid ammonia NH3 enters a liquid ammonia line 14 transferring the liquid ammonia from the storage tank to the injection connection 13. To reduce the pressure to bring the pressure in the liquid ammonia line 14 closer to the pressure in the by-pass water line 12 a pressure reduction valve 15 is provided in the liquid ammonia line 14. The liquid ammonia NH3 is reduced to a pressure of roughly 9 bar such that a passive transfer to the by-pass water line 12 is still possible. Thus, there is a slight overpressure in the liquid ammonia line 14 after the pressure reduction valve 15, still. In a static mixer 36 the solution of liquid ammonia NH3 in the water portion in the by-pass water line 12 is homogenized. The by-pass water line 12 transports the water portion in the by-pass water line 12 against the main stream in the main water line 10 (anti-parallel direction). The pressure of 9 bar in the by-pass water line 12 is further reduced at a pressure reduction valve 27 provided in the by-pass water line 12 upstream of or directly at the reunification connection 18.

At the reunification connection 18 the water in the main water line 10 mixes with the alkalized water from the by-pass line 12 and is transported along the main water stream in the main water line 10. It passes the branching point 11 (most of it regarding volume and "weight per weight" w/w) and reaches a measurement point 16, where at least either of the pH, the ammonia concentration and/or the electric conductivity is measured by a probe e.g., a pH meter 19. The respective measurement value is sent from the measurement point 16 to a control unit 29. Therein, a control signal is generated based on the measurement value. This control signal is sent to the pressure reduction valve 15 to control opening versus closing of the respective valve 15. This way a feedback loop is implemented that allows to control the amount, concentration or pH of the water running in the main water line as alkalized water.

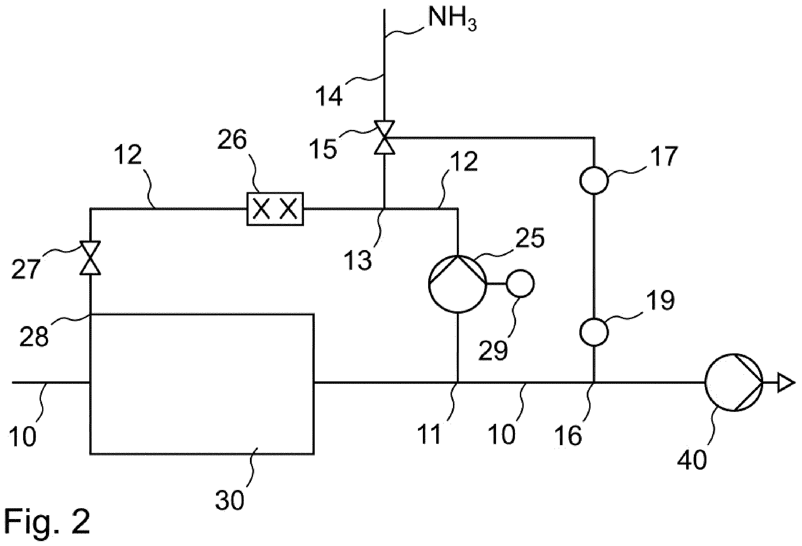

Fig. 2 shows a second embodiment of a water system 20 according to the invention. Structures that correspond in function carry the same reference sign. With respect to these structures, one shall refer back to the explanations regarding Fig. 1 and the first embodiment. The main difference is that the liquid ammonia NH3 is provided directly from another process in liquid form where it is generated as a waste product into the liquid ammonia line 14. Therein it has a pressure of 15 to 25 bar as well. This pressure is also reduced by an actively controlled pressure reduction valve 15 which receives a respective control signal from a control unit 25 wherein the control signal is generated based on a measurement signal e.g. a pH value from a pH-meter 19 or at least one of an ammonia concentration or the electric conductivity. Furthermore, the respective reunification connection 18 is placed at a water tank 30 that can hold several hundred liters of water. The depicted system allows to exchange 480 t / h of water. The temperature in the main water line 10 (comprising the water tank 30 here as well) reaches up to 112 °C in this embodiment. The temperature is based on the process implemented. In the by-pass water line 12 a water portion flow of 100 l / h is reached. The main water line 10 feeding main water stream into the water tank 30 may come from boiler feed water supply, steam condensation processes or comparable high volume boiler feed water processes. The by-pass water in the by-pass water line 12 is fed back into the main water line 10 directly at a reunification connection 28 directly located at water tank 30 in this embodiment. A feedback loop for controlling the respective pH or alkalization state of the water leaving the water tank 30 towards at least one (super-)high-pressure pump 40 for further processes is established that way.

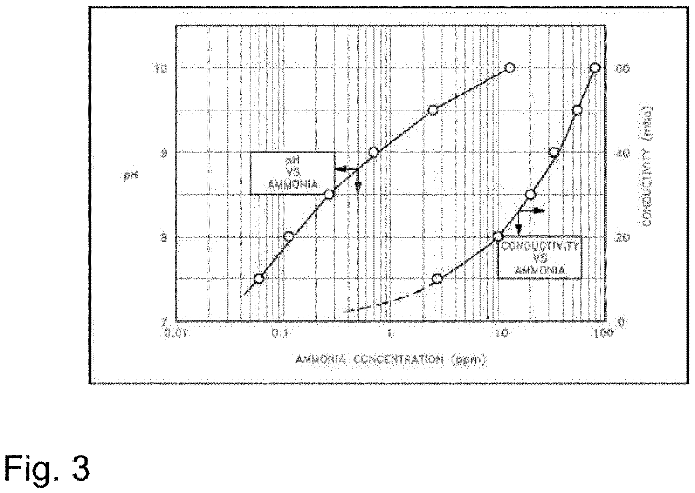

Fig. 3 (see e.g. PowerTech eV, V. G. B. "VGB-Standard Feed Water, Boiler Water and Steam Quality for Power Plants/Industrial Plants", VGB PowerTech Service GmbH: Essen Germany (2011)) compares the pH change (pH) when the ammonia concentration is increased as matter of example in pure water conditions under normal pressure. Ammonia concentration is given in mg / kg of pure water. The ammonia axis (X-axis) is in logarithmic scale. Pure water conditions, titration and pH measurements are defined and performed, respectively, according to the sources and documents described above. Furthermore, the change of conductivity (L) is shown in pure water conditions.

### Reference signs

- pH: pH change plot
- p: pressure
- T: temperature
- NH3: liquid ammonia
- 10: main water line
- 11: branch point
- 12: by-pass water line
- 13: injection connection
- 14: liquid ammonia line
- 15: pressure reduction valve
- 16: pH measurement point
- 17: valve control device
- 18: reunification connection
- 19: pH meter
- 20: water system
- 25: booster pump
- 26: static mixer
- 27: pressure reduction valve
- 28: reunification connection directly at water tank
- 29: control unit
- 30: boiler
- 40: (super-)high-pressure pump

## Claims

1. Method of water alkalization comprising the steps of
- providing water or neutral pH water or neutral pH distilled water
- providing ammonia (NH₃) in a pressure-temperature regime where the ammonia (NH3) is kept in its liquid state
- injecting the liquid ammonia (NH₃) directly into the water.

2. Method of claim 1, wherein the injection pressure in the pressure-temperature regime is in a range between 7 and 10 bar or between 7.5 and 9.5 bar or between 8 and 9 bar.

3. Method of claim 1 or 2, wherein the temperature in the pressure-temperature regime is in a range between 10 °C and 55 °C or between 15 °C and 45 °C or between 20 °C and 35 °C.

4. Method of any of the preceding claims, further comprising
- providing the water as a water stream in a water line (10),
- injecting the liquid ammonia (NH₃) at an injection connection (13) directly into the water line (12).

5. Method of any of the preceding claims, further comprising
- providing the water as a water stream in a water line (10),
- splitting of a portion of the water from the water stream flowing in the water line (10) at a branch point (11) into a by-pass water line (12),
- injecting the liquid ammonia (NH3) at an injection connection (13) into the by-pass water line (12),
- feeding the water in the by-pass water line (12) back into the water line (10).

6. Method of claim 5, wherein the water in the by-pass line (12) is fed back into the water line (10) upstream of the branch point (11), and/or wherein the portion in the by-pass water line (12) is transferred in a direction against the water stream flow direction in the water line (10), and/or wherein the water line is a main water line with a main water flow, and/or wherein the by-pass water-line is a minor water line with a minor water portion.

7. Method of claims 4 to 6, further comprising
- measuring any one of the pH and/or the conductivity and/or the ammonia concentration in the water line and/or the main water line (10) at at least one measurement point (16),
- controlling the amount of liquid ammonia (NH₃) injected into the water line and/or the main water line (10) and/or the by-pass water line (12), based on the pH and/or on the electric conductivity and/or on the ammonia concentration measured at the measurement point (16).

8. Method of claim 7, wherein the measurement point (16) is downstream of the branch point (11), and/or wherein the controlling of the amount of liquid ammonia fed into the water line or the main water line (10) or the by-pass water line (12) is based on an opening and/or a closing of a valve (15) in a liquid ammonia line (14), and/or wherein the controlling of the amount of liquid ammonia fed into the water line or the main water (10) line or the by-pass water line (12) is based on an opening and/or a closing of a valve (15) at the injection connection (13).

9. Method of any of the preceding claims, wherein the ammonia is directly transferred from an ammonia production site where ammonia is produced as a product and/or where ammonia is produced as a waste product in form of a liquid ammonia stream to the injection connection.

10. Method of any of the preceding claims, wherein the pressure is reduced after the ammonia is fed into the water.

11. Method of any of the preceding claims, wherein the target ammonia concentration in the water line or the main water line (10) ranges between 0.5 to 5 ppm or between 1 and 4 ppm or between 1.5 and 3 ppm.

12. Method of any of the preceding claims, wherein the injection connection (13) is located at a boiler feed water system (20), and/or wherein the injection connection (13) is directly connected to a boiler (30) of the boiler feed water system (20), and/or wherein the injection connection (13) is directly connected to a water tank (30).

13. Water system (20) for direct inline injection of pressurized liquid ammonia, or a water system (20) for direct inline injection of pressurized liquid ammonia according to one of the preceding claims, comprising
- a water line (10),
- a by-pass water line (12) splitting off from the water line (10) at a branch point (11),
- an injection connection (13) in the by-pass line for injecting liquid ammonia (NH₃) into the water flowing in the by-pass line (12), and
- a reunification connection (18) for feeding the water from the by-pass water line (12) back into the water line (10).

14. Water system (20) according claim 12, further comprising
- at least one booster pump to increase the pressure from the pressure level of the main water line towards the pressure of the liquid ammonia line (14), and/or wherein the reunification connection (18) for feeding the water from the by-pass water line (12) back into the water line (10) is located upstream of the branching connection (11).

15. Water system (20) according to claim 13 or 14, further comprising
- at least one measurement device (19) measuring at least one of the pH, the electric conductivity and the ammonia concentration in the water line (10)
- a valve or pressure reduction valve (15) in the liquid ammonia line (14) controlled dependently on at least one of the target pH, the electric conductivity and the ammonia concentration measured by the measurement device (19).

16. Water system (20) according to claim 15, wherein the target pH ranges between 9 and 10 and/or between 9.2 and 9.8 and/or wherein the target ammonia concentration ranges between 0.5 to 5 ppm and/or between 1 and 4 ppm and/or between 1.5 and 3 ppm.

17. Disinfection system comprising a water system (20) according to any one of the claims 13 to 16, further comprising dosing of chlorine to obtain the disinfectant monochloramine.
